# FASCICULE DE BREVET EUROPEEN

(11) **EP 1 020 678 B1**
(45) Date de publication et mention de la délivrance du brevet: **17.09.2003**
(21) Numéro de dépôt: 00400034.5
(22) Date de dépôt: 07.01.2000
(51) Int. Cl.: F16L 59/14, F16L 7/00

(54) **Ligne de transfert de fluide cryonégique et utilisation pour le transfert d'hélium liquide**
Übertragungsleitung für kryogenes Fluid und Verwendung für den Transport von flüssigem Helium
Cryogenic fluid transfer line and its use for the transfer of liquid helium

(30) Priorité: 12.01.1999 FR 9900221
(43) Date de publication de la demande: 19.07.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Sengelin, Jean-Paul, 38960 Saint Etienne de Cross (FR)
(74) Mandataire: Le Moenner, Gabriel

(56) Documents cités:
- EP-A- 0 437 377
- US-A- 3 762 447

## Description

La présente invention concerne les lignes de transfert de fluides cryogéniques, du type comprenant, dans une enveloppe tubulaire extérieure, au moins un tube intérieur de transfert de fluide et au moins un organe d'espacement s'étendant transversalement entre le tube et l'enveloppe.

Dans les techniques connues actuelles, (voir, par exemple, le document US-A-3 762 447), les organes d'espacement sont en général en acier inoxydable brut et sur-dimensionnés pour limiter les pertes thermiques par conduction.

La présente invention a pour objet de proposer une ligne de transfert de fluide, et plus particulièrement dès structures d'organes d'espacement optimisées permettant, de façon simple et sans surcoût significatif, de réduire considérablement les pertes thermiques.

Pour ce faire, selon l'invention, l'organe d'espacement présente une surface extérieure polie, typiquement par application d'une couche de produit réfléchissant.

Selon des aspects préférés de l'invention:
- les zones de contact de l'organe d'espacement avec le tube intérieur et l'enveloppe extérieure ont une extension angulaire inférieure à 90°, typiquement inférieure à 60°, les zones de contact avec le tube d'une part et avec l'enveloppe d'autre part étant avantageusement décalées angulairement,
- une portion de tube intermédiaire en matériau à faible conductictivité thermique est interposée entre l'organe d'espacement et le tube intérieur, avantageusement avec interposition d'une couche de matériau isolant entre la portion du tube intermédiaire et le tube intérieur,

La présente invention a également pour objet l'utilisation d'une telle ligne de transfert cryogénique pour le transfert d'hélium liquide.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue partielle en coupe longitudinale d'un premier mode de réalisation de l'invention;
- la figure 2 est une vue en coupe transversale suivant le plan de coupe II-II de la figure 1;
- la figure 3 est une vue en coupe partielle longitudinale d'un autre mode de réalisation de l'invention; et
- la figure 4 est une vue en coupe transversale suivant le plan de coupe IV-IV de la figure 3.

Dans la description qui va suivre et sur les dessins, les éléments identiques ou analogues portent les mêmes chiffres de référence.

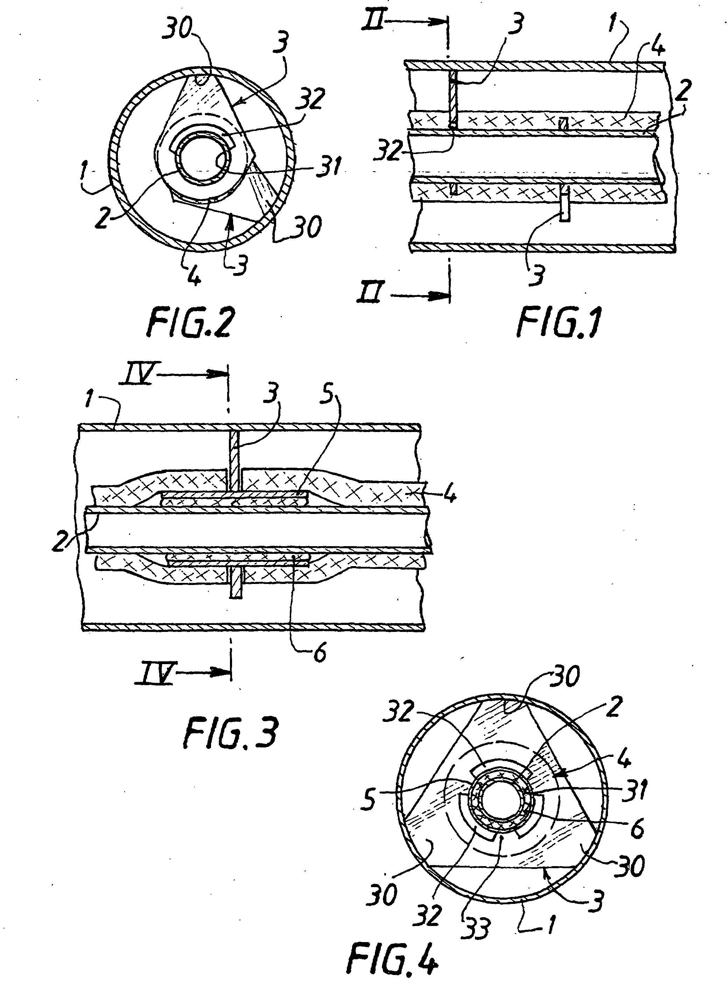

Sur la figure 1 on reconnaît les principaux éléments d'une ligne de transfert de fluide cryogénique simple, à savoir une enveloppe extérieure étanche 1 dans laquelle s'étend un tube de transfert de fluide cryogénique 2 maintenu en position, ici concentriquement, dans l'enveloppe 1, au moyen d'organes d'espacement 3 disposés à intervalles sensiblement réguliers le long du tube 2 et décalés angulairement les uns des autres par rapport à l'axe de ces derniers. Classiquement, le tube 2 est entouré ou revêtu d'une gaine 4 de superisolant, réalisé par exemple par bobinage, tel que celui commercialisé sous l'appellation NH12ST par la Société Cascadec.

Dans le mode de réalisation des figures 1 et 2, l'organe d'espacement 3 s'étend radialement d'un seul côté du tube 2. Selon l'invention, il prend appui extérieurement contre la face interne du tube extérieur 1 par une zone d'extrémité 30 de faible extension angulaire, inférieure à 30° dans l'exemple représenté. Le tube 2 est pour sa part enfilé dans un alésage 31 de l'organe d'espacement 3 dont une partie est agrandie par une lumière angulaire 32 se situant en regard de la zone de contact distale 30 et d'extension angulaire supérieure à cette dernière, de sorte qu'il ne puisse établir un pont thermique direct entre le tube intérieur 2 et l'enveloppe 1 au droit de la zone de contact 30.

Dans le mode de réalisation des figures 3 et 4, l'organe d'espacement 3 présente une forme générale triangulaire avec trois zones extérieures 30 d'appui contre l'enveloppe 1, chacune d'une extension angulaire réduite, inférieure à 30°. Corrélativement, l'alésage intérieur 31 se réduit, ici, à 3 doigts 33, d'extension angulaire inférieure à 30°, séparés par trois lumières 32 situées chacune en regard d'une zone d'appui distale 30.

De plus, dans ce mode de réalisation des figures 3 et 4, l'organe d'espacement 3 ne supporte pas directement le tube intérieur 2: une structure intermédiaire coaxiale d'au moins une portion du tube intermédiaire 5 et d'un matelas tubulaire 6 de matériau isolant ou superisolant est interposé entre les doigts 33 de l'organe d'espacement 3 et le tube intérieur 2. Le matelas 6 est avantageusement bobiné autour du tube 2 et les portions de tube 5 sont maintenues autour du matelas 6 par les doigts 33. Dans ce mode de réalisation, la gaine de calorifugeage 4 du tube intérieur 2 se prolonge autour de la structure intermédiaire en entourant le tube intermédiaire 5, comme on le voit bien sur la figure 3.

Selon un aspect de l'invention, les organes d'espacement 3 sont réalisés en matériau non métallique à faible conductivité thermique, typiquement en fibre de verre et résine époxy, et leurs surfaces extérieures, en l'occurence au moins les faces axialement opposées, subissent un traitement de surface approprié afin d'éviter le phénomène de corps noir, typiquement par placage ou dépôt d'un revêtement métallique de très faible épaisseur, avantageusement en aluminium.

Selon un autre aspect de l'invention, le tube intermédiaire 5 est lui aussi réalisé en matériau faiblement conducteur, par exemple en acier inoxydable ou alliage fer/nickel, ou également en fibre de verre époxy. Le mouflage isolant intérieur 6 est typiquement réalisé dans le même superisolant que la gaine 4.

L'enveloppe extérieure 1 est typiquement en acier inoxydable. Le tube intérieur 2 est également en acier inoxydable ou en alliage fer/nickel type Invar. L'espace intérieur à l'enveloppe 1 est placé sous vide entretenu.

L'agencement de ligne de transfert selon l'invention convient tout particulièrement au transfert de fluides cryogéniques à très basse température, en particulier pour le transfert d'hélium liquide notamment vers des installations de confinement de plasmas à aimants supraconducteurs.

Quoique la présente invention ait été décrite en relation avec des modes de réalisation particuliers, elle ne s'en trouve pas limitée mais au contraire susceptible de modifications et de variantes qui apparaîtront à l'homme de l'art, dans le cadre défini par les revendications suivantes. En particulier, elle vise également les lignes de transfert avec un faisceau de tubes intérieurs parallèles chacun maintenu dans l'enveloppe 1 par des organes d'espacement unilatéraux tels que ceux décrits en relation avec les figures 1 et 2.

## Revendications

1. Ligne de transfert de fluide cryogénique comprenant, dans une enveloppe tubulaire extérieure (1), au moins un tube intérieur de transfert de fluides (2) et au moins un organe d'espacement (3) s'étendant transversalement entre le tube intérieur et l'enveloppe, **caractérisée en ce que** l'organe d'espacement (3) présente une surface extérieure polies typiquement par application d'une couche de produit réfléchissant.

2. Ligne selon la revendication 1, **caractérisée en ce qu'**au moins les faces axiales de l'organe d'espacement (3) sont revêtues d'une couche de produit réfléchissant.

3. Ligne selon la revendication 1 ou la revendication 2, **caractérisée en ce que** les zones de contact (30,33) de l'organe d'espacement avec au moins l'enveloppe extérieure (1) ont une extension angulaire inférieure à 90°, de préférence inférieure à 60°.

4. Ligne selon la revendication 3, **caractérisée en ce que** les zones de contact (30,33) de l'organe d'espacement (3) avec le tube intérieur et l'enveloppe sont décalées angulairement.

5. Ligne selon l'une des revendications précédentes, **caractérisée en ce qu'**elle comporte au moins une portion de tube intermédiaire (5) en matériau à faible conductivité thermique disposé entre l'organe d'espacement (3) et le tube intérieur (2).

6. Ligne selon la revendication 5, **caractérisée en ce qu'**elle comprend au moins une couche de matériau isolant (6) entre la portion de tube intermédiaire (5) et le tube intérieur (2).

7. Ligne selon l'une des revendications précédentes, **caractérisée en ce que** l'organe d'espacement (3) est réalisé en matériau non métallique à faible conductivité thermique.

8. Ligne selon l'une des revendications précédentes, **caractérisée en ce que** le tube intérieur (2) est entourée d'une gaine (4) de matériau isolant.

9. Ligne selon la revendication 8 dans son rattachement à l'une des revendications 5 à 7, **caractérisée en ce que** la gaine (4) entoure également la portion de tube intermédiaire (5).

10. Utilisation d'une ligne de transfert selon l'une des revendications précédentes pour le transfert d'hélium liquide.

## Patentansprüche

1. Übertragungsleitung für ein Tiefsttemperaturfluid mit in einer rohrförmigen Außenhülle (1) zumindest einem Innenrohr zur Übertragung von Fluiden (2) und zumindest einem Abstandselement (3), das sich quer zu dem Innenrohr und der Hülle erstreckt, **dadurch gekennzeichnet, dass** das Abstandselement (3) eine typischerweise durch Auftragung einer Schicht eines reflektierenden Produkts glänzende Außenfläche aufweist.

2. Leitung nach Anspruch 1, **dadurch gekennzeichnet, dass** zumindest die axialen Seiten des Abstandselements (3) mit einer Schicht eines reflektierenden Produkts bedeckt sind.

3. Leitung nach Anspruch 1 oder Anspruch 2, **dadurch gekennzeichnet, dass** die Kontaktbereiche (30, 33) des Abstandselements (3) mit zumindest der Außenhülle (1) eine Winkelausdehnung von kleiner als 90°, vorzugsweise von kleiner als 60°, umfassen.

4. Leitung nach Anspruch 3, **dadurch gekennzeichnet, dass** die Kontaktbereiche (30, 33) des Abstandselements (3) mit dem Innenrohr und der Hülle angular versetzt sind.

5. Leitung nach einem der vorhergehenden Ansprüche, **dadurch gekennzeichnet, dass** sie zumindest einen Zwischenrohrabschnitt (5) aus einem Material mit geringer Wärmeleitfähigkeit umfasst, der zwischen dem Abstandselement (3) und dem Innenrohr (2) angeordent ist.

6. Leitung nach Anspruch 5, **dadurch gekennzeichnet, dass** sie zumindest eine Schicht aus isolierendem Material (6) zwischen dem Zwischenrohrabschnitt (5) und dem Innenrohr (2) umfasst.

7. Leitung nach einem der vorhergehenden Ansprüche, **dadurch gekennzeichnet, dass** das Abstandselement (3) aus einem nichtmetallischen Material mit geringer Wärmeleitfähigkeit hergestellt ist.

8. Leitung nach einem der vorhergehenden Ansprüche, **dadurch gekennzeichnet, dass** das Innenrohr (2) von einem Mantel (4) aus isolierendem Material umgeben ist.

9. Leitung nach Anspruch 8 in seinem Rückbezug auf einen der Ansprüche 5 bis 7, **dadurch gekennzeichnet, dass** der Mantel (4) ebenso den Zwischenrohrabschnitt (5) umgibt.

10. Verwendung einer Übertragungsleitung nach einem der vorhergehenden Ansprüche für die Übertragung von flüssigem Helium.

## Claims

1. Cryogenic fluid transfer line comprising, in a tubular outer casing (1), at least one inner fluid transfer tube (2) and at least one spacing member (3) extending transversely between the inner tube and the casing, **characterized in that** the spacing member (3) has a polished outer surface, typically polished by applying a layer of reflecting product.

2. Line according to Claim 1, **characterized in that** at least the axial faces of the spacing member (3) are coated with a layer of reflecting product.

3. Line according to Claim 1 or Claim 2, **characterized in that** the regions (30, 33) of the spacing member that are in contact with at least the outer casing (1) have a less than 90°, preferably less than 60°, angular extension.

4. Line according to Claim 3, **characterized in that** the regions (30, 33) of the spacing member (3) that are in contact with the inner tube and the casing are angularly offset.

5. Line according to one of the preceding claims, **characterized in that** it includes at least one intermediate tube portion (5) made of a material having a low thermal conductivity, placed between the spacing member (3) and the inner tube (2).

6. Line according to Claim 5, **characterized in that** it comprises at least one layer (6) of insulating material between the intermediate tube portion (5) and the inner tube (2).

7. Line according to one of the preceding claims, **characterized in that** the spacing member (3) is made of a non-metallic material having a low thermal conductivity.

8. Line according to one of the preceding claims, **characterized in that** the inner tube (2) is surrounded by a sheath (4) of insulating material.

9. Line according to Claim 8 in its connection with one of Claims 5 to 7, **characterized in that** the sheath (4) also surrounds the intermediate tube portion (5).

10. Use of a transfer line according to one of the preceding claims for transferring liquid helium.
